(19) **Europäisches Patentamt**
**European Patent Office**
**Office européen des brevets**

(11) **EP 2 177 546 A1**

(12) **EUROPEAN PATENT APPLICATION**
published in accordance with Art. 153(4) EPC

(43) Date of publication:
**21.04.2010 Bulletin 2010/16**

(51) Int Cl.:
**C08F 20/10** *(2006.01)* **C08F 2/44** *(2006.01)*
**C08L 63/00** *(2006.01)* **G02B 1/04** *(2006.01)*

(21) Application number: **08792207.6**

(22) Date of filing: **05.08.2008**

(86) International application number:
**PCT/JP2008/064021**

(87) International publication number:
**WO 2009/020116 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.08.2007 JP 2007207804**

(71) Applicant: **Konica Minolta Opto, Inc.**
**Hachioji-shi, Tokyo 192-8505 (JP)**

(72) Inventors:
• **KIMURA, Akiyoshi**
 **Hino-shi**
 **Tokyo 191-8511 (JP)**

• **TAIMA, Yasuo**
 **Hino-shi**
 **Tokyo 191-8511 (JP)**
• **WAKAMATSU, Hideaki**
 **Hino-shi**
 **Tokyo 191-8511 (JP)**

(74) Representative: **Henkel, Feiler & Hänzel**
**Patentanwälte**
**Maximiliansplatz 21**
**80333 München (DE)**

(54) **RESIN MATERIAL FOR OPTICAL PURPOSES, AND OPTICAL ELEMENT UTILIZING THE SAME**

(57) Disclosed is a resin material for optical purposes, which has high light permeability and high refractive index stability against temperature variation. Also disclosed is an optical element utilizing the resin material. The resin material for optical purposes comprises a curable resin and an inorganic microparticle comprising two or more metal oxides having different refractive indexes and dispersed in the curable resin, wherein the inorganic microparticle has a refractive index distribution, has the surface treated with a surface-treating agent, and is at least partially modified with a surface-modifying agent having a polymerizable functional group, and wherein the refractive index of the curable resin after being cured (nh) and the refractive index of the inorganic microparticle (ng) meet the requirement represented by the formula (1).

**Description**

**TECHNICAL FIELD**

The present invention relates to a resin material which is suitably applied for a lens, a filter, a grating, an optical fiber and a planar light waveguide, and to an optical element using the same resin material.

**BACKGROUND**

An optical pickup apparatus is installed in an information apparatus such as a player, a recorder or a drive for reading out or recording information from or to an optical information recording medium such as an MO, CD or DVD. The optical pickup apparatus has an optical element unit for irradiating light generated from a light source having a predetermined wavelength to the medium, and for receiving the reflected light by a light receiving element. The optical element unit is composed of an optical element containing a lens for condensing the light on the reflective layer of the optical information recording medium or on the light receiving element.

In mounting of electronic components or a solid-state image sensor module, there is a soldering process in which melting of a soldering past is carried out in a furnace of a high temperature of about 290 °C, this is called "a reflow process". Due to the fact that a photographic lens made of a plastic material has no heat stability which can bear the high temperature of reflow soldering, the lens is attached after reflow soldering. Therefore, there is a problem that the manufacturing efficiency of an assembly falls and the heat-resistant lens is called for from the viewpoint of increasing the efficiency of an assembly. However, by using with common thermoplastic resin having a high Tg and being strong against heat, the molding temperature became too high and fabrication was impossible. Then, thermosetting resin or a UV curable resin is a liquid at a normal temperature, and since it hardens by heat or UV light, it can be easily obtained the resin composite with required thermal properties, such as Tg after hardened.

In an information apparatus capable of reading and writing information to plural kinds of recording media such as a CD/DVD player, it is necessary that the optical pickup apparatus has a constitution capable of corresponding to the wavelength of the light to be applied to each of the media and the shape thereof. In such case, the optical element is preferably one commonly applicable to both of the optical information media from the viewpoint of cost and picking up property.

In the optical element unit made of a plastic material, it is desirable that the plastic material is a material having optical stability similar to that of a glass lens. The optical plastic material has a refractive index of sufficiently improved stability with respect to humidity, but the improvement in the thermal stability of the refractive index is not fully sufficient at the present stage.

As the ways of correcting the refractive index of the plastic lenses as described above, there were proposed various ways of using fillers made of microparticles. As one of them, there is proposed an optical product having a reduced thermo-sensitivity containing synthetic microscopic material composed of a polymer host material having a thermosensitive property and microparticles dispersed in the polymer host material (for example, refer to patent documents 1 and 2). In Patent documents 1 and 2, it is described that the thermo-sensitivity is decreased, for example, by mixing 40 weight% or more of particles of aluminium oxide or magnesium oxide in the host material. However, by this way, a refractive-index difference between the host material and inorganic particles are large, and the amount of mixed inorganic particles was so much that the decrease of light transmission was large and it was not able to use as an optical element.

Moreover, in Patent document 3, there was proposed a high refractive-index resin composite which contains particles and a transparent resin, which has a refractive-index distribution of the particles in the depth direction the high refractive-index resin composite. However, the particles disclosed in Patent document 3 were easily aggregated to result in insufficient transparency, and sufficient restrain of thermo-sensitivity was not obtained.

In Patent document 4 was proposed an organic-inorganic composite material which contains a composite metal oxide nano particles composed of Si and other metallic element other than Si. However, by this way, although it was possible to control the refractive index of particles, it was difficult to carry out the surface treatment of particles, and there was observed white turbidity seemingly caused by the layer separation between resin and particles. Furthermore, there was observed foaming from the particles at a high temperature state, and application as an optical resin was difficult.

Patent Document 1: Japanese Patent Application Publication (hereafter referred to as JP-A) No. 2002-207101
Patent Document 2: JP-A No. 2003-240901
Patent Document 3: JP-A No. 2005-213410
Patent Document 4: JP-A No. 2005-146042

## DISCLOSURE OF THE INVENTION

## PROBLEMS TO BE SOLVED BY THE INVENTION

The present invention was made in view of the above-mentioned problems. An object of the present invention is to provide an optical resin material which has high light transmittance and high thermal stability in refractive index, and to provide an optical element using the same resin material.

## MEANS TO SOLVE THE PROBLEMS

The above-described object of the present invention is accomplished by the following structures.

1. An optical resin material comprising a curable resin and inorganic particles dispersed in the curable resin, provided that inorganic particles are composed of two or more metal oxides each having a different refractive index, wherein each of the inorganic particles has a distribution in a refractive index and is subjected to a surface treatment; at least a portion of a surface of each of the particles is modified with a surface modifier having a polymerizable functional group; and the following formula (1) is satisfied, provided that a refractive index of the curable resin after cured is nh and a refractive index of the inorganic particle is ng.

$$(1) \quad |ng - nh| \leq 0.07$$

2. The optical resin material of the aforesaid item 1, wherein the inorganic particle has a lower refractive index at a surface portion of the inorganic particle than at an inner portion of the inorganic particle.
3. The optical resin material of the aforesaid items 1 or 2, wherein the curable resin has a cyclic olefin structure in the molecule.
4. An optical element produced by molding the optical resin material of any one of the aforesaid items 1 to 3.

## EFFECTS OD THE INVENTION

The present invention can provide an optical resin material which has high light transmittance and high thermal stability in refractive index, and to provide an optical element using the same resin material.

## BRIEF DESCRIPTION OF DRAWING

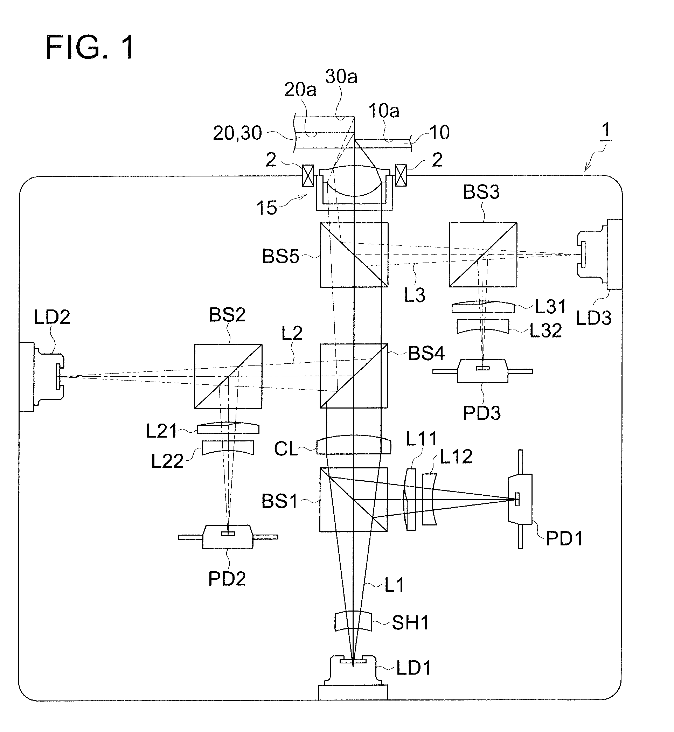

Fig. 1 is a schematic drawing showing a composition of an optical pickup apparatus using an optical element of the present invention.

## DESCRIPTION OF SYMBOL

15: objective lens (optical element)

## BEST MODES TO CARRY OUT THE INVENTION

The present inventors investigated the above described problems and found out that the following optical resin material exhibits an extremely small change of refractive index under the change of temperature to result in achieving the present invention: an optical resin material comprising a curable resin and inorganic particles dispersed in the curable resin, provided that inorganic particles are the composed of two or more different metal oxides each having a different refractive index, wherein each of the inorganic particles has a distribution in a refractive index and is subjected to a surface treatment; at least a portion of a surface of each of the particles is modified with a surface modifier having a polymerizable functional group; and a refractive index nh of the curable resin after cured and a refractive index ng of the inorganic particle satisfy the predetermined condition.

The best modes to carry out the present invention will be described in the following. The embodiments which will be described in the following contain the preferable imitations to carry out the present invention, however, the scope of the present invention is not limited to the following descriptions.

[Curable Resin]

The curable resin used in the invention is a thermo-curable resin which is cured by heat treatment, a photocurable resin which is cured by irradiation with ultraviolet rays or electron beam. It may be used without specific limitation as long as the transparent resin composition is formed via curing process after mixing inorganic particles with an uncured curable resin. As the curable resin, preferably used are: an epoxy resin, a vinyl ester resin, and a silicone resin. As one embodiment, the epoxy resin and its composition will be explained below, but the present invention is not specifically limited thereto.

(Hydrogenated epoxy resin)

The curable resins applicable in the present invention include a hydrogenated epoxy resin, and an epoxy resin obtained via hydrogenation of an aromatic epoxy resin is preferably used. Examples of the hydrogenated epoxy resin include a hydrogenated epoxy resin obtained via hydrogenation of an aromatic ring of a bisphenol A type epoxy resin, a bisphenol F type epoxy resin, a bisphenol epoxy resin such as 3,3',5,5'-tetramethyl-4,4'-biphenol type epoxy resin or 4,4'-biphenol type epoxy resin, a phenol novolac type epoxy resin, a cresol novolac type epoxy resin, a bisphenol A novolac type epoxy resin, a naphthalene diol type epoxy resin, a trisphenylolmethane type epoxy resin, a tetrakisphenylolethane type epoxy resin, and a phenol dicyclopentadiene novolac type epoxy resin. Among these, a hydrogenated epoxy resin obtained via direct hydrogenation of the aromatic ring of a bisphenol A type epoxy resin, a bisphenol F type epoxy resin or a bisphenol epoxy resin is especially preferred in obtaining a hydrogenated epoxy resin with a high hydrogenation rate.
An alicyclic epoxy resin obtained via epoxidation of alicyclic olefin can be added in an amount of 5 - 50 weight% in the hydrogenated epoxy resin. A specifically preferred alicyclic epoxy resin is 3,4-epoxycyclohexylmethyl-3',4'-epoxycyclohexane carboxylate. The viscosity of an epoxy resin composition containing this alicyclic epoxy resin can be reduced, which results in improvement of workability.

(Curable resin having a cyclic olefin structure)

A resin having a cyclic olefin structure is preferable among curable resins from the point of excelling in characteristics, such as transparency, heat resistivity, or low hygroscopic property. Examples of the cyclic structure are: a cyclic alkane structure (saturated alicyclic hydrocarbon, cycloalkane) and a cyclic olefin structure (unsaturated alicyclic hydrocarbon, cycloalkane). In the present invention, a preferable resin contains a cyclic olefin structure, it may be used resins disclosed, for example, in JP-A No. 2003-73559, paragraphs numbers 0031 to 0036.

(Acid anhydride curing agent)

It is preferable that an acid anhydride curing agent is added when an epoxy resin is used for a curable resin.
A preferable acid anhydride curing agent has no carbon-carbon double bond in the molecule. Examples thereof include hexahydrophthalic anhydride, methylhexahydrophthalic anhydride, hydrogenated nadic anhydride, hydrogenated methyl nadic anhydride, hydrogenated trialkyl hexahydrophthalic anhydride, and 2,4-diethylglutaric anhydride. Among these, hexahydrophthalic anhydride and/or methylhexahydrophthalic anhydride are especially preferred in providing excellent heat resistance and colorless cured materials.
The addition amount of the acid anhydride curing agent depends on the epoxy equivalent in the epoxy resin, but it is preferably mixed in the range of 40 - 200 parts by weight based on 100 parts by weight of the epoxy resin.

(Curing accelerating agent)

A curing accelerating agent may be added when an epoxy resin is used for a curable resin in order to promote curing reaction of the epoxy resin and the acid anhydride curing agent. Examples of the curing accelerating agent include tertiary amines and their salts, imidazoles and their salts, organic phosphine compounds, and organic acid metal salts such as zinc octylate or tin octylate. Specifically preferred curing accelerating agents are organic phosphine compounds. The addition amount of the curing accelerating agent is preferably in the range of 0.01 - 100 parts by weight based on 100 parts by weight of hydrogenated acid anhydride curing agent. The addition amount of the curing accelerating agent falling outside the above range is not preferable since balance between heat resistance and humidity resistance of the cured epoxy resin becomes lowered.

[Inorganic Particles]

(Kinds and properties of inorganic particles)

The inorganic particles used in the present invention are composed of two or more kinds of metal oxide compounds each having a different refractive index and have a distribution in a refractive index. It can be arbitrary selected from inorganic particles enabling to achieve the object of the present invention.

Inorganic particles having a distribution in a refractive index indicate the state that a single inorganic microparticle has a portion of a different refractive index. The local refractive index of one inorganic microparticle can be calculated from the information of the component composition of the inorganic microparticle obtained by means of a local elementary analysis using such as EDX in an observation with a transmission electron microscope (TEM).

As the aforesaid metal oxides, it may be used metal oxides containing two or more kinds of metal selected from the group consisting of Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb, Bi and a rare earth metal. More specifically, cited example are oxide particles having a composition mixed with two or more kinds of oxides such as silicon oxide, titanium oxide, zinc oxide, aluminum oxide, zirconium oxide, hafnium oxide, niobium oxide, tantalum oxide, magnesium oxide, calcium oxide, strontium oxide, barium oxide, indium oxide, tin oxide or lead oxide. Among these, it is preferable to suitable select compounds which do not exhibit absorption, luminescence and phosphorescence in the region of wavelength in which the optical element is used.

As a result of investigation by the present inventors, it was fount that light scattering produced by an incident light becomes minimized when the difference between the refractive index of the curable resin after being cured and the refractive index of the inorganic particles dispersed in the resin was small. For this reason, when dispersing inorganic particles in a curable resin, it is required that the difference of the refractive index of the curable resin used as a mother material and the refractive index of inorganic particles should be 0.07 or less, and it is more preferable that it is 0.05 or less.

Moreover, in order to make hard to cause light scattering in the contact interface of a curable resin and inorganic particles, it is preferable that the difference between the refractive index of the curable resin after being cured and the refractive index of the surface portion of the inorganic particles which touch the curable resin is small. In this case, it is possible to reduce an amount of light scattering even when it is difficult to make small the difference between the refractive index of the curable resin after being cured and the refractive index (the average refractive index) of the inorganic particles. In fact, the refractive index of the curable resin after being cured which can be chosen is often lower than the refractive index (the average refractive index) of the inorganic particles. Therefore, as for the inorganic particles, it is preferable that the refractive index of the surface portion which touches the curable resin is lower than the refractive index of the inner portion of the inorganic particles. Here, the inner portion of the inorganic particles refers to a central portion of the particle from the center to 10 to 90% of the diameters of a particle, and a surface portion refers to this outermost layer part. The local refractive indexes of the inner portion of the inorganic particles and the surface portion can be calculated from the information of the component composition of the inorganic microparticle obtained by means of a local element analysis using such as EDX in an observation with a transmission electron microscope (TEM).

The light scattering at the time of pass through a light tends to be larger as the size of the inorganic particles are larger when the curable resin and the inorganic particles are dispersed. It was found that when the difference of the refractive index between the curable resin and the inorganic particles dispersed is small, the degree of light scattering produce by a light passed through becomes small even if relatively large sized inorganic particles are used. Moreover, it was found that transparency can be maintained even if the content of the inorganic particles is increased.

Further, by the investigation of the present inventors, it was found that $|dn/dT|$ of the optical resin material can be effectively reduced by dispersing the inorganic particles having a relatively low refractive index. Here, n is a refractive index and T is a temperature. It is not well understood the detail of the reason why $|dn/dT|$ becomes small for the optical resin material composed of distributed inorganic particles having a low refractive index. However, it is considered that the temperature change of the volume fraction of the inorganic particles in the optical resin material will shift $|dn/dT|$ of the optical resin material in the reduced direction with decreasing the refractive index of the inorganic particles.

It is difficult to improve simultaneously all of the properties of the optical resin material such as a reduction effect of $|dn/dT|$, a light transmittance, a desired refractive index. The inorganic particles dispersed in the curable resin can be suitably chosen in consideration of the size of dn/dT of the inorganic particles itself, the difference between dn/dT of the inorganic particles and dn/dT of the curable resin, the refractive index of the inorganic particles according to the required properties for the optical resin material. Furthermore, it is desirable to suitably choose the inorganic particles having high affinity with the curable resin used as a mother material, i.e., having good dispersibility in the curable resin, which results in reduced light scattering in order to maintain a light transmittance state.

Specific examples of inorganic particles applied are preferably compound oxide particles composed of silicon oxide and other oxides of Al, B, Ge, P, Ti, Nb, Zr, Y, W, La, Gd, and Ta.

The above-mentioned refractive index is a value which is measured with inorganic particles following with ASTMD542 standard, and it is measured, for example, with an Abbe type refractometer. The refractive index values listed in various literatures can be used for it. Moreover, the refractive index of inorganic particles can be checked by the following method: to prepare a dispersion of inorganic particles dispersed in various solvents having adjusted the refractive index; to measure the absorbance of the dispersion; and to measure the refractive index of the solvent which exhibits the minimum absorbance value.

As for the inorganic particles composed of two or more kinds of metal oxides each having a different refractive index, it is preferable to adjust the refractive index to fall in the above-mentioned range by compounding two or more kinds of metal oxides. As long as the transparency of the obtained optical resin material is maintained at this time, two or more different kinds of metal atoms which exist in the inside of inorganic particles may exist uniformly, or they may be localized therein. The refractive index ng of the particles of two or more kinds of metal oxides having a different which refractive index with each other can be almost estimated from the volume fraction and a refractive index of each metal oxide.

Furthermore, it is known that the particles composed of two or more kinds of metal oxides each having a different refractive index will exhibit almost the same optical property regardless the type of particles of the core-shell particles or uniformly dispersed particles when the diameter of the particle is 20 nm or less. Therefore, if the diameter of the particle in this range, it is preferable to locate an inorganic oxide having larger affinity with a surface modifying agent at an outer surface of the particles. In surface treatment, it is preferable to use the silane coupling agent from a heat-resistant viewpoint. In that case, the core shell type particles formed a silica surface are specifically effective. Further, it is preferable that the surface of the particles has a lower refractive index in order to reduce light scattering of the particles.

For example, when a curable resin having a cyclic olefin structure which is preferably used for an optical element is employed, inorganic particles having the refractive index in the above-describe range of 1.45 - 1.6 are preferable as inorganic particles which decrease the amount of |dn/dT| while maintaining a light transmittance state. As a result, a desirable effect is demonstrated by the obtained optical resin material having the refractive index in the range of 1.49 - 1.55.

The inorganic particles in the present invention designate the inorganic particulates whose average grain diameters are 1 - 50 nm. An average grain diameter is preferably 1 - 20 nm, and more preferably it is 1 - 10 nm. When an average grain diameter is less than 1 nm, dispersion of inorganic particles becomes difficult and required property may not be obtained. On the other hand, when an average grain diameter exceeds 50 nm, transparency may be decreased due to the fact that the obtained optical resin material obtained becoming turbid, and light transmittance may become less than 80%. An average grain diameter here is a volume average value of the diameter (sphere conversion particle size) obtained by converting inorganic particulates into a sphere having the same volume of the inorganic particle.

Further, although the shape of inorganic particles is not particularly limited, spherical inorganic particles are suitably used. Specifically, it is preferable that the value obtained by the following formula is 0.5 - 1.0, and more preferably n.7 - 1.0: the minimum diameter of the inorganic particles (it is the minimum value of the distance between two tangents when these two tangents are drawn to touch the outer periphery of the inorganic particles) / the maximum diameter of the inorganic particles (it is the maximum value of the distance between two tangents when these two tangents are drawn to touch the outer periphery of the inorganic particles).

Moreover, although the distribution of the particle diameter of inorganic particles is not specifically limited, in order to exhibit the effect of the present invention discover more efficiently, inorganic particles with a relatively narrow distribution are suitably used rather than inorganic particles with a wide distribution.

(Production method and surface modification of inorganic particles)

Any known methods can be applied for producing the inorganic particles without any limitations. Examples of the production method include: a mechanical method (a method of pulverizing a massive compound material with a pulverizing device such as a ball mill or Attritor), a pyrolysis method (a method to obtain particles by thermally decomposing the raw material), a spray drying method, a flame spraying method, a plasma method, a gas phase reaction method, freeze drying method, a heat kerosene method, a heat petroleum method, a precipitation method (a co-precipitation method), a hydrolysis method (an aqueous salt solution method, an alkoxide method and a sol-gel method) and a hydrothermal method (a precipitation method, a crystallization method, a hydrothermal decomposition method, a hydrothermal decomposition method and a hydrothermal oxidation methods). Among these, a pyrolysis method, a precipitation method and a hydrolysis method are preferable methods from the viewpoint of producing small sized inorganic particles. Moreover, it is also preferable to combine two or more of these methods.

For example, required inorganic particles (oxide particles) can be obtained by hydrolyzing a plurality of halogenated metals and alkoxy metals as raw materials in the reaction system containing water using. In this case, the way of using together an organic acid or organic amine is also used for stabilizing the inorganic particles.

The required oxide particles can be obtained by applying a frequently employed method for forming inorganic particles (oxide particles), in which a metal powder of a suitable amount for forming dust cloud is thrown into a chemical flame and burned in an oxygen containing atmosphere to produce oxide particles having a size of 5 - 100 nm. The required oxide particles can also be obtained in a gas phase by the reaction of a raw material gas flow and an oxygen gas as disclosed in JP-A No. 2005-218937.

Any known methods can be applied for the surface modification without any limitation. For example, a method can be applied in which the surface of each particle is modified by hydrolysis of the modifier agent in the presence of water. In such method, an acid or an alkali is suitably applied as a catalyst. It is generally considered that a hydroxyl group at the surface of the particle and a hydroxyl group formed by hydrolysis of the modifier agent are combined to form a bond by dehydration.

In the optical resin material of the present invention, it is preferred that inorganic particles are subjected to a surface treatment.

Methods to treat the surface of the inorganic particles include a surface treatment by a surface modifier such as a coupling agent, and a surface treatment by polymer grafting or mechanochemical processing.

Examples of the surface modifier used for surface treatment of inorganic particles include an organic silane compound such as a silane type coupling agent, silicone oil, and coupling agents of a titanate type, an aluminate type or a zirconate type. These are not specifically limited, however, it can be appropriately selected depending on the type of inorganic particles and a thermoplastic resin in which the inorganic particles are dispersed. Further, two or more different surface treatments can be simultaneously or separately performed.

Specific examples of a silane type surface treating agent include vinylsilazane, trimethylchlorosilane, dimethyldichlorosilane, methyltrichlorosilane, trimethylalkoxysilane, dimethyldialkoxysilane, methyltrialkoxysilane and hexamethyldisilazane. Among these, trimethylmethoxysilane, dimethyldimethoxysilane, methyltrimethoxysilane and hexamethyldisilazane are preferably utilized.

Examples of a silicone oil type surface treating agent include straight silicone oil such as dimethylsilicone oil, methylphenylsilicone oil or methylhydrogensilicone oil; and modified silicone oil such as amino modified silicone oil, epoxy modified silicone oil, carboxyl modified silicone oil, carbinol modified silicone oil, methacryl modified silicone oil, mercapto modified silicone oil, phenol modified silicon oil, one terminal reactive modified silicone oil, different functional group modified silicone oil, polyether modified silicone oil, methylstyryl modified silicone oil, alkyl modified silicone oil, higher fatty acid ester modified silicone oil, hydrophilic specific modified silicone oil, higher alkoxy modified silicone oil, higher fatty acid containing modified silicone oil or fluorine modified silicone oil.

As a surface treating agent having a polymerizable functional group, the following compounds are commercially available and it can be arbitrary selected: vinyltrichlorosilane, vinyltrimethoxysilane, vinyltriethoxysilane, 2-(3, 4-epoxycyclohexyl)ethyltrimethoxysilane, 3-xyglycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltriethoxysilane and 3-acryloxypropyl trimethoxysilane. These treating agents may be appropriately diluted with hexane, toluene, methanol, ethanol, acetone or water before use.

Examples of a surface treatment method employing a surface modifying agent include a wet heating method, a wet filtering method, a dry stirring method, an integral blend method and a granulating method. When performing a surface modification of particles with a particle diameter of not more than 50 nm, a dry stirring method is preferably employed so as to prevent particle aggregation, however, the method surface treatment is not limited thereto.

These surface modifying agents may be utilized in combination of plural kinds thereof. Further, since characteristics of surface modified particles may differ depending on kinds of a surface modifying agent used, the surface modifying agent can be selected to improve the affinity to a thermoplastic resin to be utilized when an optical resin material is prepared. The content of the surface modifying agent is not specifically limited, however, it is required to use a surface modifying agent having a polymerizable functional group un the molecule, and it is preferable that the content is from 1 to 40% by weight, and more preferably from 10 to 30% by weight, based on the weight of inorganic particles. By provided with the surface modifying agent having a polymerizable functional group on the surface of the inorganic particles, the polymerizable group is incorporated to the polymer matrix when the resin is cured, and it will exhibit preventing effect of high thermosensitive property.

<Optical Element>

The optical element of the present invention is characterized by using the above-mentioned resin material for optical use. Hereafter, the production method of an optical element is described in detail.

(Production method of optical element molding)

Although there is no specific limitation for the molding method of an optical element using the optical resin material of the present invention, in order to acquire a molding excellent in characteristics, such as low birefringence, high mechanical strength, and high dimensional accuracy, a melt molding method is desirable.

As a melt molding method, a press forming method, an extrusion molding method and an injection molding method can be cited. However, an injection molding method is preferable from a viewpoint of moldability and manufacturing efficiency.

Molding conditions are suitably chosen by the application purpose or the forming method. For example, the temperature of the resin composite (there are two cases, one is a case in which a resin is used solely and another is a case in which a mixture of a resin and an additive are used) in injection molding method is determined by considering the followings. In order to give an appropriate fluidity during molding and to prevent a skin mark and strain of a molded product, and further, from a viewpoint of prevent generating of the silver streak by the pyrolysis of the resin, and of preventing yellowing of moldings effectively, the temperature is preferably in the range of 150-400 °C, it is more preferably from 200-350 °C, and it is still more preferably from 200-330 °C.

The molded product of the present invention can be utilized in various forms such as a spherical form, a bar form, a plate form, a column form, a cylinder form, a tube form, a fiber form, or a film or sheet form. It is applied to an optical plastic lens which is one of various optical elements of the present invention since it is excellent in low birefringence, transparency, mechanical strength, heat resistance and low water absorption. It can be suitably applied to other optical devices.

(Examples of application to optical element)

The optical resin material of the present invention is obtained by the above-described preparation method. The specific application thereof to optical elements will be described.

The followings are cited as application examples: an optical lens and an optical prism incorporated in an image pick lens system of a camera; a lens of a microscope, an endoscope and a telescope; an light transmitting lens such as an eyeglass lens; a pickup lens for an optical disk such as CD, CD-ROM, WORM (recordable optical disk), MO (rewritable optical disk; magneto-optical disk), MD (mini-disk) and DVD (digital versatile disk); and a lens in a laser scanning system such as an fθ lens for a laser beam printer or a lens for a sensor; and a prism lens in a finder system of a camera.

Examples of an optical disk applicable include: CD, CD-ROM, WORM (recordable optical disk), MO (rewritable optical disk; magneto-optical disk), MD (mini-disk) and DVD (digital versatile disk). As other optical applications, there are mentioned a light guide of a liquid crystal display and the like; an optical film such as a polarizer film, a retardation film or a light scattering film; a light diffusion plate; an optical card; or a liquid crystal display element substrate.

Among these, the molded products are preferably used as an optical element such as a pickup lens or a laser scanning system lens, in which birefringence is required. Most preferable application is a pickup lens.

The optical resin material of the present invention has an excellent thermal properties and it is suitably applied for a lens for a high density optical disk using a blue-violet laser beam.

Among the above described molded objects, suitable employed are: a pickup lens which is required to exhibit low birefringence; an optical element used for a lens system of laser scanning system. An optical pickup apparatus 1 is described below by referring figure in which is used an optical element molded by the optical resin material of the present invention.

As is shown in Fig. 1, the optical pickup apparatus 1 of an embodiment of the present invention has three kinds of semiconductor laser oscillator LD1, LD2 and LD3 as the light sources. Among them, the semiconductor laser oscillator LD1 emits a light beam of a specific wavelength within the range of from 350 to 450 nm (405 nm or 407 nm, for example) for a BD (or AOD) 10. The semiconductor laser oscillator LD2 emits a light beam of a specific wavelength within the range of from 620 to 680 nm for a DVD 20. The semiconductor laser oscillator LD3 emits a light beam of a specific wavelength within the range of from 750 to 810 nm for a CD 30.

A shaver SH1, a splitter BS1, a collimator CL, splitters BS4 and BS5, and a objective lens 15 are successively arranged in line in the direction of the light axis of the blue light beam emitted from the semiconductor laser oscillator LD1, namely in the direction from the bottom to the top of the drawing, and the DB10, DVD 20 or CD 30 as the optical information recording medium is placed at a position facing to the objective lens 15. Further, a cylindrical lens L11, a concave lens L12 and a photo-detector PD1 are successively arranged in line on the right side of the splitter BS1 in Fig. 1.

Splitters BS2 and BS4 are successively arranged in line in the direction of the light axis of red light beam emitted from the semiconductor laser oscillator LD2, namely in the direction of left to right in Fig. 1. Further, a cylindrical lens L21, a concave lens L22 and a photo-detector PD2 are successively arranged under the splitter BS2 in Fig. 1.

Splitters BS3 and BS5 are successively arranged in line in the direction of the light axis of light beam emitted from the semiconductor laser oscillator LD3, namely in the direction of right to left in Fig. 1. Further, a cylindrical lens L31, a concave lens L32 and a photo-detector PD3 are successively arranged under the splitter BS3 in Fig. 1.

The objective lens 15, which is an optical element, is arranged so as to face to the BD 10, DVD 20 or CD 30 as the optical information recording medium, and has the function of condensing the light emitted from each of the semiconductor laser oscillator LD-1, LD2 and LD3 to the BD 10, DVD 20 or CD 30. A two dimensional actuator 2 is attached to the objective lens 15 so that the objective lens 15 can be freely moved in the upward and downward direction in Fig. 1 by the two dimensional actuator.

Then, the function of the optical pickup apparatus will be described.

The optical pickup apparatus 1 of the present invention takes a different action according to the kind of a recording medium. Therefore, the details of the actions for BD10, DVD20 and CD30 will be respectively described.

At first, the action of the optical pickup apparatus 1 for BD10 will be described.

When information is recorded to the BD 10 or when information is played back from the BD 10, the semiconductor laser oscillator LD1. emits light. The emitted light is formed light beam L1 illustrated by the solid line in Fig. 1, the light beam is corrected in the shape by passing through the shaver SH1, passed through the splitter SB1 and then made to parallel light by the collimator CL, and further by passing through the splitters BS4, SB5 and the objective lens 15 to form a light spot on the recording surface of 10a of the BD 10.

The light forming the light spot is modulated by the information bits on the recording surface 10a of BD 10 and reflected by the surface 10a, the reflected light is passed through the objective lens 15, splitter BS5 and collimator CL, and then reflected by the splitter BS1 and passed trough the cylindrical lens L11 to be given astigmatic focus error. After that, the light is passed through the concave lens L12 and received by the photo-detector PD1. Thus recording the information to the BD 10 or playback of the information in the BD 10 can be performed.

Then, the action of the optical pickup apparatus 1 for DVD20 will be described.

When information is recorded to the DVD 20 or when information is played back from the DVD 20, the semiconductor laser oscillator LD2 emits light. The emitted light is formed light beam L2 illustrated by the chain line in Fig. 1, the light beam is passed through the splitter SB2 and reflected by the splitter BS4. After that the light is passed through the splitter SB5 and the objective lens 15 to form a light spot on the recording surface 20a of the DVD 20.

The light forming the light spot is modulated by the information bits on the recording surface 20a of DVD 20 and reflected by the surface 20a, the reflected light is passed through the objective lens 15 and splitter BS5, reflected by the splitters BS4 and BS2, and passed trough the cylindrical lens L21 to be given astigmatic focus error. After that, the light is passed through the concave lens L22 and received by the photo-detector PD2. Hereafter, by repeating these actions, the recording of the information to the DVD 20 or playback of the information in the DVD 20 can be performed.

Lastly, the action of the optical pickup apparatus 1 for CD30 will be described.

When information is recorded to the CD 30 or when information is played back from the CD 30, the semiconductor laser oscillator LD3 emits light. The emitted light is formed light beam L3 illustrated by the broken line in Fig. 1, the light beam is passed through the splitter SB3 and reflected by the splitter BS5. After that the light is passed through the objective lens 15 to form a light spot on the recording surface 30a of the CD 30.

The light forming the light spot is modulated by the information bits on the recording surface 30a of CD 30 and reflected by the surface 30a, the reflected light is passed through the objective lens 15 and reflected by the splitters BS5 and BS3, and passed trough the cylindrical lens L31 to be given astigmatic focus error. After that, the light is passed through the concave lens L32 and received by the photo-detector PD3. Thus recording the information to the CD 30 or playback of the information in the CD 30 can be performed.

On the occasion of the recording of information to the DB 10, DVD 20 or CD 30 and the playback of information in the DB 10, DVD 20 or CD 30, the optical pickup apparatus 1 detects the light amount variation caused by the variation in the shape and the position of the light spot on the each of the photo-detectors PD 1, PD2 and PD 3 for focusing and track detecting. In the optical pickup apparatus 1, the objective lens 15 is moved by the two dimensional actuator 2 according to the detecting result by the each of the photo-detector PD1, PD2 and PD3 so that the light from the semiconductor laser oscillator LD1, LD2 or LD3 is focused on the designated track on the recording surface 10a, 20a or 30a of the BD10, DVD 20 or CD 30, respectively.

**EXAMPLES**

Next, the present invention will now be specifically described referring to examples, but the present invention is not limited thereto. In the examples, "%" represents "weight%", unless otherwise specifically specified.

Example

[Preparation of inorganic particles]

(Preparation of inorganic particles 1)

By using Nano Creator™ (produced by Hosokawa Micron Corp.), a raw material gas flow prepared with polydimethylsiloxane and tetra(2-ethylhexyl)titanate so that a mole ratio of Si to Ti is 2.5 : 1, and an oxygen gas were introduced in a reaction space and they were allowed to react to yield inorganic particles in the form of white powder.

Then, the inorganic particles were subjected to a surface modification treatment. More specifically, 300 g of methanol and 1 mol% of aqueous nitric acid were added to 5 g of the obtained inorganic particles. While this solution was stirred at 50 °C, 100 g of methanol and 6 g of cyclopentyltrimethoxysilane were added in it for 60 minutes, and 3 g of vinylmethoxysilane was further added and the mixture was stirred for 24 hours. Moreover, the obtained transparent dispersion was suspended in ethyl acetate, and a centrifuge separation was carried out to obtain inorganic particles 1.

Inorganic particles 1 were confirmed to have a core-shell structure composed of a $TiO_2$ core and a $SiO_2$ shell by an observation with a transmission electron microscope (TEM) and by a local elementary analysis of EDX, and the refractive index of the inner portion of inorganic particles 1 was found to be 2.7 and the surface portion thereof was found to be 1.48.

(Preparation of inorganic particles 2)

As a raw material gas flow, a solution of polydimethylsiloxane and tetra(2-ethylhexyl)titanate was used in which a mole ratio of Si to Ti was adjusted to be 1.5 : 1. Inorganic particles 2 in the form of white powder were prepared in the same manner as preparation of inorganic particles 1 except that a surface modification treatment was not carried out.

Inorganic particles 2 were confirmed to have a core-shell structure composed of a $TiO_2$ core and a $SiO_2$ shell by an observation with a transmission electron microscope (TEM) and by a local elementary analysis of EDX, and the refractive index of the inner portion of inorganic particles 2 was found to be 2.7 and the surface portion thereof was found to be 1.48.

(Preparation of inorganic particles 3)

As a raw material gas flow, a solution of polydimethylsiloxane and tetra(2-ethylhexyl)titanate was used in which a mole ratio of Si to Ti was adjusted to be 1.5 : 1. Inorganic particles 3 in the form of white powder were prepared in the same manner as preparation of inorganic particles 1 except that the raw material gas flow was changed as described above.

Inorganic particles 3 were confirmed to have a core-shell structure composed of a $TiO_2$ core and a $SiO_2$ shell by an observation with a transmission electron microscope (TEM) and by a local elementary analysis of EDX, and the refractive index of the inner portion of inorganic particles 3 was found to be 2.7 and the surface portion thereof was found to be 1.48.

(Preparation of inorganic particles 4)

As a raw material gas flow, a solution of polydimethylsiloxane and tetra(2-ethylhexyl)titanate was used in which a mole ratio of Si to Ti was adjusted to be 9 : 1. Inorganic particles 4 in the form of white powder were prepared in the same manner as preparation of inorganic particles 1 except that the raw material gas flow was changed as described above.

Inorganic particles 4 were confirmed to have a structure in which $TiO_2$ was dispersed in $SiO_2$ by an observation with a transmission electron microscope (TEM) and by a local elementary analysis of EDX, and the refractive index of the inner portion and the surface portion of inorganic particles 4 were found to be 1.49.

(Preparation of inorganic particles 5)

A suspension was prepared by adding 10 g of Aluminum Oxide C (produced by Nippon Aerosil Co., Ltd.) to a mixture solution of 160 ml of pure water, 560 ml of ethanol and 30 ml of aqueous ammonia solution (25%). To the suspension was added 4 ml of LS-2430 followed by dispersing with Ultra Apex Mill (produced by Kotobuki Co., Ltd.) to obtain a dispersion of alumina particles. Then, while stirring this dispersion, to the dispersion was dropped a mixture solution containing 62 ml of LS-2430 (tetraethoxysilane, produced by Shin-Etsu Kagaku Co., Ltd.), 16 ml of water and 56 ml of ethanol for 8 hours. After the mixture was further stirred for one hour, the pH value of the solution was elevated to 10.4 with an aqueous ammonia solution, then, the stirring was continued for 15 hours at a room temperature. Afterward, the particles were separated with a centrifuge. The separated particles were heated to dry at 190 °C for 5 hours to yield inorganic particles 5 in the form of white powder.

Inorganic particles 5 were confirmed to have a core-shell structure composed of a $Al_2O_3$ core and a $SiO_2$ shell by an observation with a transmission electron microscope (TEM) and by a local elementary analysis of EDX, and the refractive index of the inner portion of inorganic particles 5 was found to be 1.8 and the surface portion thereof was found to be 1.48.

(Preparation of inorganic particles 6)

As a raw material gas flow, a solution of octamethylcyclotetrasiloxane and zirconium 2-ethylhexyl hexanoate was used in which a mole ratio of Si to Zr was adjusted to be 3 : 1. Inorganic particles 6 in the form of white powder were prepared in the same manner as preparation of inorganic particles 1 except that the raw material gas flow was changed as described above.

Inorganic particles 6 were confirmed to have a core-shell structure composed of a $ZrO_2$ core and a $SiO_2$ shell by an observation with a transmission electron microscope (TEM) and by a local elementary analysis of EDX, and the refractive index of the inner portion of inorganic particles 6 was found to be 2.2 and the surface portion thereof was found to be 1.48.

(Preparation of inorganic particles 7)

Commercially available inorganic particles Aluminum Oxide C (aluminium oxide, produced by Nippon Aerosil Co., Ltd.) were applied and they were designated as inorganic particles 7.

[Measurements of average particle size and refractive index of inorganic particles]

The prepared inorganic particles were subjected to measurements of average particle size and refractive index using the method described below.

(Measurement of refractive index of inorganic particles)

Among commercially available standard refractive index liquids (Cargille reference refractive index liquids, provided by MORITEX Corp.), a plurality of liquids exhibiting a refractive index in the range of 1.45 - 1.75 at a wavelength of 588 nm was selected so that the liquid exhibit a difference of 0.01 in refractive index. Next, each of inorganic particles to be evaluated was dispersed in the above-described reference refractive index liquids using a ultra-sonic washer, and a refractive index of the dispersion exhibiting the highest transmittance at a wavelength of 588 nm was determined as a refractive index of each of inorganic particles to be evaluated.

Measurement results are shown in Table 1.

Table 1

| Inorganic Particles No. | Composition | | Surface Treatment | Average Particle Size (nm) | Refractive Index | | |
| --- | --- | --- | --- | --- | --- | --- | --- |
| | Core | Shell | | | ng | Inner Portion | Surface Portion |
| 1 | $TiO_2$ | $SiO_2$ | Yes | 110 | 1.57 | 2.70 | 1.48 |
| 2 | $TiO_2$ | $SiO_2$ | None | 115 | 1.62 | 2.70 | 1.48 |
| 3 | $TiO_2$ | $SiO_2$ | Yes | 115 | 1.62 | 2.70 | 1.48 |
| 4 | $TiO_2$ is dispersed in $SiO_2$ | | Yes | 25 | 1.49 | 1.49 | 1.49 |
| 5 | $Al_2O_3$ | $SiO_2$ | Yes | 20 | 1.51 | 1.70 | 1.48 |
| 6 | $ZrO_2$ | $SiO_2$ | Yes | 25 | 1.55 | 2.18 | 1.48 |
| 7 | Homogeneous $Al_2O_3$ | | None | 13 | 1.70 | 1.70 | 1.70 |

[Preparation of optical resin materials]

(Preparation of optical resin material 1)

There were mixed 39 g of 1-adamantyl methacyrate as a thermo-curable resin, 23 g of the above-described inorganic particles 1 as inorganic particles, 0.1 g of Irganox 1010™ as an anti-oxidation agent and 0.05 g of 1,1-bis(t-butylperaxy)-3,3,5-trimethylcyclohexane (Perhexa 3M-95, produced by NOF Corporation) as a radical polymerization initiator. After completion of mixing, the mixture was kneaded with PolyLab Mixer (HAAKE Co, Ltd.) at a rotation speed of 10 rpm for 10 minutes to obtain a resin composition.

After loading the resin composite in the molding die having a dimension of 30 mm x 30mm x 3 mm, the tabular optical resin material 1 (plate for an examination) was produced by carrying out a heating press at 110 °C for 1 hour.

(Preparation of optical resin materials 2 - 7)

Optical resin materials 2 - 7 were prepared in the same manner as preparation of optical resin material 1, except that inorganic particles 1 was replaced by each of inorganic particles 2 - 7.

[Evaluation of optical resin materials 2 - 7]

Transmittance and thermal stability of refractive index of the prepared optical resin materials 2 - 7 (plates for an examination) were evaluated.

(Measurement of transmittance)

The transmittance of each sample was measured by a method according to ASTM D1003. Specifically, a light transmittance was measured using TURBIDITY METER T-2600DA, (manufactured by Tokyo Denshoku Co., Ltd.), and thus measured light transmittance was referred to as transmittance of a sample.
The sample exhibiting transmittance of 80% or less was judged as not suitable for the optical element since the transparency was not sufficient.

(Measurement of thermal stability of refractive index)

An optical resin material was prepared in the same manner as preparation of optical resin material 1, except that inorganic particles 1 was not added. After heat-melting the prepared optical resin material, it was molded in the form of a plate having a thickness of 3 mm. This plate was polished. While changing temperature from 23 °C to 60 °C and measuring the refractive index at each temperature with a light of 588 nm using the automatic refractometer (KPR-200, manufactured by Kalnew Optical Industrial Co., Ltd.), the temperature change rate (dn/dT of the resin) of the refractive index accompanying the temperature change was calculated.
Then, optical resin materials 1 - 7 each containing one of inorganic particles 1 - 7 were heat-melted, followed by molded in the form of a plate having a thickness of 3 mm. While changing temperature from 23 °C to 60 °C and measuring the refractive index at each temperature with a light of 588 nm, the temperature change rate (dn/dT of the resin) of the refractive index accompanying the temperature change was calculated.
Based on the calculated results, the dn/dT rate of change of each sample was calculated via the following equation, and these values were used as an indicator of the temperature stability of a refractive index.

$$\text{dn/dT rate of change (\%)} = [(\text{dn/dT of the resin} - \text{dn/dT of each sample}) / (\text{dn/dT of the resin})] \times 100$$

The evaluation results are shown in Table 2.

Table 2

| Optical Resin Material No. | Curable Resin | | Inorganic Particles | | | \|nh-ng\| | Thermal stability of refractive index | Transmittance (%) | Remarks |
|---|---|---|---|---|---|---|---|---|---|
| | Kind | nh | No. | ng | Surface Treatment | | | | |
| 1 | ADM | 1.51 | 2 | 1.62 | None | 0.11 | -74 | 8 | Comparative example |
| 2 | ADM | 1.51 | 7 | 1.70 | None | 0.90 | Cannot be measured | Cannot be measured | Comparative example |
| 3 | ADM | 1.51 | 3 | 1.62 | Yes | 0.11 | -70 | 19 | Comparative example |
| 4 | ADM | 1.51 | 1 | 1.57 | Yes | 0.06 | -40 | 80 | Inventive example |

(continued)

| Optical Resin Material No. | Curable Resin | | Inorganic Particles | | | \|nh-ng\| | Thermal stability of refractive index | Transmittance (%) | Remarks |
|---|---|---|---|---|---|---|---|---|---|
| | Kind | nh | No. | ng | Surface Treatment | | | | |
| 5 | ADM | 1.51 | 4 | 1.49 | Yes | 0.02 | -45 | 85 | Inventive example |
| 6 | ADM | 1.51 | 5 | 1.51 | Yes | 0.00 | -41 | 89 | Inventive example |
| 7 | ADM | 1.51 | 6 | 1.55 | Yes | 0.04 | -43 | 80 | Inventive example |
| ADM: 1-adamantyl methacyrate | | | | | | | | | |

By the results shown in Table, the samples of the present invention are demonstrated to exhibit a high light transmission and a high temperature stability of refractive index.

**Claims**

1. An optical resin material comprising a curable resin and inorganic particles dispersed in the curable resin, provided that inorganic particles are composed of two or more metal oxides each having a different refractive index, wherein each of the inorganic particles has a distribution in a refractive index and is subjected to a surface treatment; at least a portion of a surface of each of the particles is modified with a surface modifier having a polymerizable functional group; and the following formula (1) is satisfied, provided that a refractive index of the curable resin after cured is nh and a refractive index of the inorganic particle is ng:

$$\text{formula (1)} \quad |ng - nh| \leq 0.07.$$

2. The optical resin material of claim 1, wherein the inorganic particle has a lower refractive index at a surface portion of the inorganic particle than at an inner portion of the inorganic particle.

3. The optical resin material of claims 1 or 2, wherein the curable resin has a cyclic olefin structure in the molecule.

4. An optical element produced by molding the optical resin material of any one of claims 1 to 3.

# FIG. 1

**INTERNATIONAL SEARCH REPORT**

| International application No. |
| --- |
| PCT/JP2008/064021 |

A. CLASSIFICATION OF SUBJECT MATTER
*C08F20/10*(2006.01)i, *C08F2/44*(2006.01)i, *C08L63/00*(2006.01)i, *G02B1/04* (2006.01)i

According to International Patent Classification (IPC) or to both national classification and IPC

B. FIELDS SEARCHED

Minimum documentation searched (classification system followed by classification symbols)
C08F20/00-34/02, C08F2/00-60, C08L1/00-101/16, G02B1/04

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2007-154159 A  (Konica Minolta Opto, Inc.), 21 June, 2007 (21.06.07), Claims 1, 5, 6; Par. Nos. [0038], [0039], [0044], [0048] to [0050], [0054] (Family: none) | 1-4 |
| P,A | WO 2007/116803 A1  (Konica Minolta Opto, Inc.), 18 October, 2007 (18.10.07), Claims 1 to 7 (Family: none) | 1-4 |
| A | JP 2005-325349 A  (Konica Minolta Opto, Inc.), 24 November, 2005 (24.11.05), Claims 1 to 8; Par. No. [0167] (Family: none) | 1-4 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 October, 2008 (16.10.08) | 28 October, 2008 (28.10.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/064021

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-73564 A  (Mitsui Chemicals, Inc.),<br>12 March, 2003 (12.03.03),<br>Claims 1 to 10<br>(Family: none) | 1-4 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002207101 A
- JP 2003240901 A
- JP 2005213410 A
- JP 2005146042 A
- JP 2003073559 A
- JP 2005218937 A